(19) Europäisches Patentamt
European Patent Office
Office européen des brevets

(11) **EP 4 056 969 B1**

(12) **FASCICULE DE BREVET EUROPEEN**

(45) Date de publication et mention
de la délivrance du brevet:
**19.07.2023 Bulletin 2023/29**

(21) Numéro de dépôt: **22161032.2**

(22) Date de dépôt: **09.03.2022**

(51) Classification Internationale des Brevets (IPC):
***G01J 5/08*** *(2022.01)*

(52) Classification Coopérative des Brevets (CPC):
**G01J 3/42; G01J 5/0225; G01J 5/0837;**
G01J 2005/0077

(54) **DETECTEUR THERMIQUE D'UN RAYONNEMENT ELECTROMAGNETIQUE COMPORTANT UNE ANTENNE ET UNE CHARGE RESISTIVE COUPLEES DE MANIERE INDUCTIVE**

THERMISCHER DETEKTOR FÜR ELEKTROMAGNETISCHE STRAHLUNG MIT EINER ANTENNE UND EINER OHMSCHEN LAST, DIE INDUKTIV GEKOPPELT SIND

THERMAL ELECTROMAGNETIC RADIATION DETECTOR COMPRISING AN ANTENNA AND AN INDUCTIVELY-COUPLED RESISTIVE CHARGE

(84) Etats contractants désignés:
**AL AT BE BG CH CY CZ DE DK EE ES FI FR GB GR HR HU IE IS IT LI LT LU LV MC MK MT NL NO PL PT RO RS SE SI SK SM TR**

(30) Priorité: **12.03.2021 FR 2102503**

(43) Date de publication de la demande:
**14.09.2022 Bulletin 2022/37**

(73) Titulaire: **Commissariat à l'énergie atomique et aux énergies alternatives**
**75015 Paris (FR)**

(72) Inventeur: **DUSSOPT, Laurent**
**38054 Grenoble cedex 09 (FR)**

(74) Mandataire: **INNOV-GROUP**
**310, avenue Berthelot**
**69372 Lyon Cedex 08 (FR)**

(56) Documents cités:
**EP-A1- 2 246 677     EP-A1- 2 602 599**
**US-B1- 6 329 649     US-B1- 7 375 333**

## Description

### DOMAINE TECHNIQUE

Le domaine de l'invention est celui des détecteurs thermiques à antenne adaptés à détecter un rayonnement électromagnétique, en particulier un rayonnement térahertz dont la gamme de fréquences peut être comprise entre 0.3 et 3THz (longueur d'onde comprise entre 0.1 et 1mm). L'invention s'applique notamment aux domaines de la sécurité, du contrôle non destructif, et de l'imagerie biomédicale.

### ÉTAT DE LA TECHNIQUE ANTÉRIEURE

Les détecteurs thermiques à antenne sont particulièrement adaptés à détecter un rayonnement électromagnétique térahertz. Ils peuvent ainsi comporter une antenne de collection du rayonnement électromagnétique couplée à une charge résistive. L'antenne de collection peut reposer sur un substrat de lecture, et la charge résistive peut être disposée dans une membrane suspendue au-dessus du substrat de lecture et thermiquement isolée de celui-ci. La membrane suspendue comporte également un transducteur thermométrique, par exemple un matériau thermistance, disposé en contact thermique avec la charge résistive.

Le document EP2246677A1 décrit un exemple d'un tel détecteur thermique à antenne. Il comporte ici deux antennes papillon croisées adaptées à collecter le rayonnement électromagnétique à détecter. Une première antenne papillon est située hors de la membrane suspendue, et est couplée à la charge résistive de manière capacitive par l'intermédiaire ici d'ailettes métalliques disposées dans la membrane suspendue. La deuxième antenne papillon est disposée dans la membrane suspendue, et est couplée à la charge résistive de manière résistive. Cependant, la membrane suspendue comporte alors des parties métalliques de grandes dimensions, i.e. la deuxième antenne papillon mais également les ailettes métalliques qui assurent le couplage capacitif avec la première antenne papillon, ce qui impacte négativement les performances du détecteur thermique en termes de constante de temps thermique, du fait de la capacité thermique élevée de la membrane suspendue.

Le document US 6329649 B1 décrit une matrice de détecteurs thermiques à antennes.

### EXPOSÉ DE L'INVENTION

L'invention a pour objectif de remédier au moins en partie aux inconvénients de l'art antérieur, et plus particulièrement de proposer un détecteur thermique à antenne adapté à détecter un rayonnement électromagnétique, en particulier un rayonnement térahertz, qui présente des performances améliorées, notamment en termes de constante de temps thermique, tout en ayant des dimensions latérales réduites. Un autre objectif de l'invention est de proposer un tel détecteur thermique dont la membrane suspendue présente une tenue mécanique et une fiabilité améliorées, et dont le procédé de fabrication est simplifié.

Pour cela, l'objet de l'invention est un détecteur thermique d'un rayonnement électromagnétique à une longueur d'onde $\lambda_c$ principale comprise dans une gamme spectrale prédéfinie, comportant :

- un substrat de lecture, comportant un circuit de lecture, et présentant un plan principal ;
- une membrane suspendue au-dessus et isolée thermiquement du substrat de lecture, comportant : un transducteur thermométrique, connecté électriquement au circuit de lecture ; et une charge résistive, en contact thermique avec le transducteur thermométrique, adaptée à convertir en puissance calorifique de la puissance électromagnétique reçue d'une antenne de collection ;
- l'antenne de collection, adaptée à collecter le rayonnement électromagnétique à détecter, située à distance de la membrane suspendue, et couplée à la charge résistive pour lui transmettre une puissance électromagnétique.

Selon l'invention, la charge résistive est formée d'une piste qui s'étend longitudinalement en forme de boucle continue fermée. De plus, l'antenne de collection comporte : une piste dite de couplage, située à la perpendiculaire de la charge résistive et s'étendant longitudinalement en forme de boucle continue ouverte, autorisant ainsi un couplage inductif entre la piste de couplage et la charge résistive ; et une partie latérale de collection, raccordée à la piste de couplage, et s'étendant à partir de celle-ci dans une zone non surplombée par la membrane suspendue.

De plus, l'antenne de collection présente des dimensions externes maximales $D_{a,x}$, $D_{a,y}$ suivant deux axes orthogonaux dans le plan principal, chacune des dimensions externes maximales $D_{a,x}$, $D_{a,y}$ de l'antenne de collection étant inférieure ou égale à $\lambda_c/8$. Enfin, la piste de couplage présente des dimensions externes maximales $D_{pc,x}$, $D_{pc,y}$ suivant lesdits axes orthogonaux, chacune des dimensions externes maximales $D_{pc,x}$, $D_{pc,y}$ de la piste de couplage étant supérieure ou égale à 35% de la dimension externe maximale $D_{a,x}$, $D_{a,y}$ correspondante de l'antenne de collection.

La longueur d'onde principale $\lambda_c$ du rayonnement électromagnétique est comprise dans une gamme spectrale prédéfinie de détection du détecteur thermique. La longueur d'onde principale peut être la longueur d'onde centrale de la gamme spectrale en question. Ainsi, lorsque le détecteur thermique est adapté à détecter un rayonnement électromagnétique térahertz dont la gamme spectrale est comprise entre 0.1 et 1mm, la longueur d'onde principale $\lambda_c$ peut être $550\mu$m environ, à plus ou moins 10% près, voire à plus ou moins 5% près.

Par ailleurs, une dimension externe maximale de l'antenne de collection est une distance maximale suivant un axe dans le plan principal entre deux bordures externes de l'antenne de collection opposées l'une à l'autre et les plus éloignées l'une de l'autre, et associée à un même détecteur thermique (et donc située dans un même pixel de détection lorsqu'il y a une matrice de détecteurs thermiques). Cette même définition s'applique aux dimensions externes maximales de la piste de couplage. Ainsi, la dimension externe maximale $D_{pc,x}$ de la piste de couplage suivant un premier axe X est au moins égale à 35% de la dimension externe maximale $D_{a,x}$ de l'antenne de collection suivant ce même axe X. Il en est de même pour la dimension externe maximale $D_{pc,y}$ de la piste de couplage suivant un deuxième axe Y (orthogonal à l'axe X) relativement à la dimension externe maximale $D_{a,y}$ de l'antenne de collection.

Ainsi, il apparaît que le fait que la piste de couplage (boucle ouverte) présente des dimensions externes maximales $D_{pc,x}$, $D_{pc,y}$ au moins égales à 35% de celles $D_{a,x}$, $D_{a,y}$ de l'antenne de collection (définies par les parties latérales) permet de collecter efficacement le rayonnement électromagnétique incident, alors même que les dimensions externes maximales $D_{a,x}$, $D_{a,y}$ de l'antenne sont réduites, et ici au plus égales à $\lambda_c/8$. Autrement dit, la piste de couplage présente non seulement une fonction de couplage inductif avec la charge résistive, mais également une fonction de collection d'une part non négligeable du rayonnement à détecter.

De plus, le fait que l'antenne de collecte présente des dimensions externes maximales $D_{a,x}$, $D_{a,y}$ au plus égales à $\lambda_c/8$ permet d'éviter que la piste de couplage présente des dimensions trop importantes. On évite ainsi que le courant électrique alternatif, généré par la collection du rayonnement électromagnétique et circulant dans la piste de couplage, présente des résonances parasites, lesquels seraient susceptibles de dégrader la qualité du couplage inductif avec la charge résistive.

De plus, il apparaît que le couplage inductif entre la piste de couplage et la charge résistive permet de convertir une proportion importante de la puissance électromagnétique collectée en une puissance calorifique dissipée par la charge résistive dans le transducteur thermométrique.

Il est alors possible de réduire fortement la taille des pixels de détection, et ainsi améliorer la résolution de détection du dispositif de détection. En effet, la dimension des pixels de détection peut ainsi être réduite d'un facteur 8 environ dans les deux dimensions, améliorant ainsi la résolution d'un facteur 64 environ.

Notons que chacune des dimensions externes maximales $D_{pc,x}$, $D_{pc,y}$ de la piste de couplage est avantageusement inférieure ou égale à 75% de la dimension externe maximale $D_{a,x}$, $D_{a,y}$ correspondante de l'antenne de collection. Par ailleurs, la largeur de la piste de couplage (i.e. sa dimension transversale dans le plan principal) est de préférence supérieure ou égale à 5% de la dimension externe maximale $D_{a,x}$, $D_{a,y}$ correspondante de l'antenne de collection. Elle peut être inférieure ou égale à 80%, à 50%, voire à 20% des dimensions externes maximales $D_{pc,x}$, $D_{pc,y}$. Notons enfin que la largeur de la piste de couplage peut ne pas être élevée, dans la mesure où la surface efficace de collection du rayonnement électromagnétique incident est essentiellement définie par ses dimensions externes maximales $D_{pc,x}$, $D_{pc,y}$ et non pas par la surface (recouvrement) occupée par la piste de couplage dans le plan principal.

Certains aspects préférés mais non limitatifs de ce détecteur thermique sont les suivants.

La charge résistive peut comporter au moins une portion résistive présentant une résistance de couche supérieure ou égale à 1 $\Omega$/carré.

La portion résistive de la charge résistive peut présenter une résistance de couche comprise entre 1 $\Omega$/carré et 10 $\Omega$/carré.

La charge résistive peut être une piste continûment résistive formée par la portion résistive seule. En variante, elle peut être une piste localement résistive formée d'au moins la portion résistive, et d'au moins une portion conductrice présentant une résistance de couche inférieure à 1 $\Omega$/carré.

La charge résistive et la piste de couplage peuvent être espacées l'une de l'autre suivant un axe orthogonal au substrat de lecture d'au plus 5 $\mu$m.

L'antenne de collection peut comporter une partie latérale de collection, raccordée à la piste de couplage et s'étendant à partir de celle-ci dans une zone non surplombée par la membrane suspendue.

La partie latérale de collection peut comporter au moins deux motifs distincts, raccordés chacun à la piste de couplage, et adaptés à collecter le rayonnement électromagnétique à détecter selon des polarisations orthogonales entre elles.

Les deux motifs peuvent être raccordés, l'un au niveau d'une extrémité longitudinale de la piste de couplage, et l'autre au niveau de l'extrémité longitudinale opposée.

Le détecteur thermique peut comporter une couche diélectrique reposant sur le substrat de lecture, l'antenne de collection reposant sur la couche diélectrique, la membrane suspendue étant espacée de l'antenne de collection par des piliers d'ancrage réalisés en au moins un matériau électriquement conducteur.

L'antenne de collection peut être assemblée à un support s'étendant au-dessus et à distance de la membrane suspendue.

La piste de couplage et la partie latérale de collection peuvent s'étendre sur le support de manière coplanaire.

La partie latérale de collection peut s'étendre sur le support, et la piste de couplage peut être espacée du support en direction de la membrane suspendue et être raccordée à la partie latérale de collection par des piliers de maintien.

Le détecteur thermique peut comporter une première antenne de collection reposant sur une couche diélectrique reposant sur le substrat de lecture, et une deuxième antenne de collection assemblée à un support s'étendant au-dessus et à distance de la membrane suspendue, les deux antennes de collection étant couplées à la charge résistive par couplage inductif.

Le détecteur thermique peut être adapté à détecter un rayonnement électromagnétique térahertz dont la gamme spectrale est comprise entre 0.3 et 3THz, soit comprise entre 0.1 et 1mm.

Le substrat de lecture peut être réalisé à base de silicium.

L'invention porte également sur un dispositif de détection comportant une matrice de détecteurs thermiques selon l'une quelconque des caractéristiques précédentes, dans lequel la matrice présente un agencement périodique des détecteurs thermiques avec un pas $p_x$, $p_y$ suivant lesdits deux axes orthogonaux dans le plan principal, chacune des dimensions externes maximales $D_{pc,x}$, $D_{pc,y}$ de l'antenne de couplage étant supérieure ou égale à 90%, voire à 95%, du pas $p_x$, $p_y$ correspondant de la matrice.

**BRÈVE DESCRIPTION DES DESSINS**

D'autres aspects, buts, avantages et caractéristiques de l'invention apparaîtront mieux à la lecture de la description détaillée suivante de formes de réalisation préférées de celle-ci, donnée à titre d'exemple non limitatif, et faite en référence aux dessins annexés sur lesquels :

les figures 1A à 1C sont des vues schématiques et partielles d'un détecteur thermique selon un mode de réalisation, respectivement en perspective (fig.1A), en perspective et en éclaté (fig.1B), et en coupe transversale (fig.1C) ;

les figures 2A et 2B sont des vues de dessus, schématiques et partielles, de la piste de couplage de l'antenne de collection et de la charge résistive, selon deux variantes de réalisation, dans lesquelles la charge résistive est une piste continûment résistive (fig.2A) ou est une piste localement résistive formée de portions résistives reliées entre elles par des portions conductrices (fig.2B) ;

la figure 3A est une vue en perspective, schématique et partielle, d'une piste de couplage de l'antenne de collection et de la charge résistive selon une variante de réalisation, et la figure 3B illustre un schéma électrique équivalent ;

les figures 4A à 4C sont des vues de dessus, schématiques et partielles, d'une antenne de couplage selon différentes variantes de réalisation ;

les figures 5A à 5C sont des vues schématiques et partielles, en coupe transversale, d'un détecteur thermique selon différentes variantes de réalisation dans lesquelles une antenne de couplage est située à distance et au-dessus de la membrane suspendue.

**EXPOSÉ DÉTAILLÉ DE MODES DE RÉALISATION PARTICULIERS**

Sur les figures et dans la suite de la description, les mêmes références représentent les éléments identiques ou similaires. De plus, les différents éléments ne sont pas représentés à l'échelle de manière à privilégier la clarté des figures. Par ailleurs, les différents modes de réalisation et variantes ne sont pas exclusifs les uns des autres et peuvent être combinés entre eux. Sauf indication contraire, les termes « sensiblement », « environ », « de l'ordre de » signifient à 10% près, et de préférence à 5% près. Par ailleurs, les termes « compris entre ... et ... » et équivalents signifient que les bornes sont incluses, sauf mention contraire.

L'invention porte d'une manière générale sur un détecteur thermique à antenne (et sur une matrice de détecteurs thermiques) adapté à détecter un rayonnement électromagnétique, en particulier dans la gamme térahertz dont une longueur d'onde principale $\lambda_c$ est comprise dans une gamme spectrale prédéfinie allant de 0.1mm à 1mm environ (gamme spectrale comprise entre 0.3 et 3THz environ). La longueur d'onde principale $\lambda_c$ est définie comme étant une longueur d'onde centrale de la gamme spectrale en question.

Le détecteur thermique est du type des détecteurs thermiques à antenne, c'est-à-dire qu'il comporte une antenne de collection adaptée à collecter le rayonnement électromagnétique à détecter. Il comporte également une charge résistive disposée dans une membrane suspendue, la charge résistive étant couplée thermiquement au transducteur thermométrique (i.e. en contact thermique). Dans le cadre de l'invention, la charge résistive est formée d'une piste s'étendant longitudinalement en forme de boucle continue fermée. De plus, l'antenne de collection, située à distance de la membrane suspendue, comporte une piste dite de couplage, située à la perpendiculaire de la charge résistive et s'étendant longitudinalement en forme de boucle continue ouverte, autorisant ainsi un couplage inductif entre la piste de couplage et la charge résistive.

Par piste, on entend une couche mince en forme de bande, c'est-à-dire dont la longueur est supérieure à la largeur. La piste étant une couche mince, son épaisseur est inférieure à sa longueur et à sa largeur. La piste de la charge résistive s'étend longitudinalement en forme de boucle continue fermée, dans le sens où elle s'étend en étant fermée sur elle-même. En revanche, la piste de couplage de l'antenne de collection présente une forme de boucle continue ouverte dans le sens où elle n'est pas fermée sur elle-même : les charges électriques peuvent y circuler en faisant des allers-retours entre ses deux extrémités longitudinales opposées (courant électrique alternatif).

Ainsi, par le fait que l'antenne de collection est située à distance de la membrane suspendue, et est couplée à la charge résistive de manière inductive, la membrane suspendue présente une capacité thermique réduite et donc une constante de temps thermique diminuée. Les performances du détecteur thermique sont donc améliorées. De plus, l'antenne de collection n'étant pas située dans la membrane suspendue, on améliore la tenue mécanique et la fiabilité de cette dernière, et on simplifie le procédé de fabrication du détecteur thermique.

Notons ici que l'invention s'applique aux différents types de transducteurs thermométriques. Ainsi, le transducteur thermométrique, qui est un élément présentant une propriété électrique variant avec son échauffement, peut être un matériau thermistance réalisé par exemple en silicium amorphe ou à base d'oxyde de vanadium ou de titane, ou peut être une capacité formée par un matériau pyroélectrique ou ferroélectrique, une diode (jonction pn ou pin), voire un transistor à effet de champ et à structure métal - oxyde - semiconducteur (MOSFET).

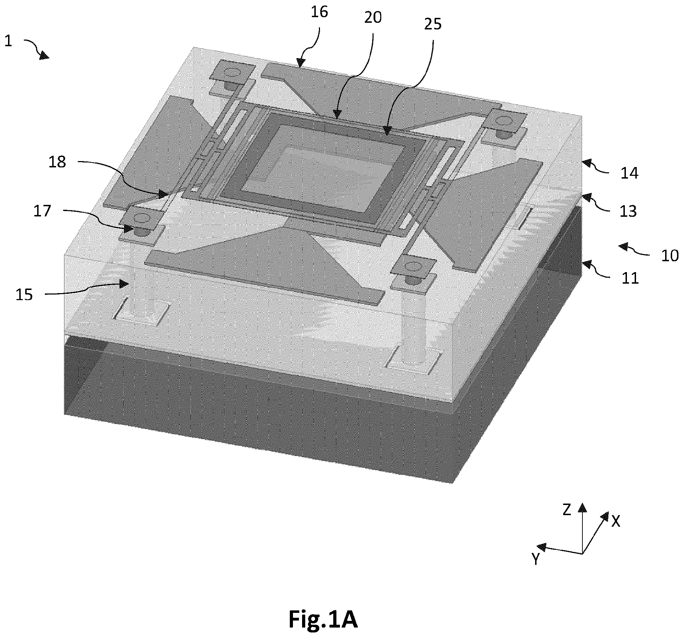

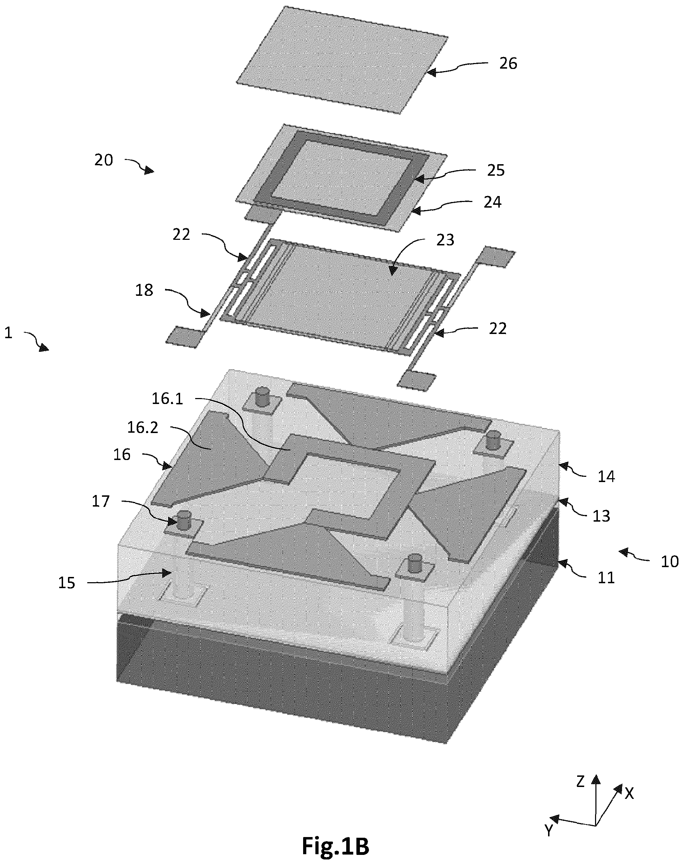

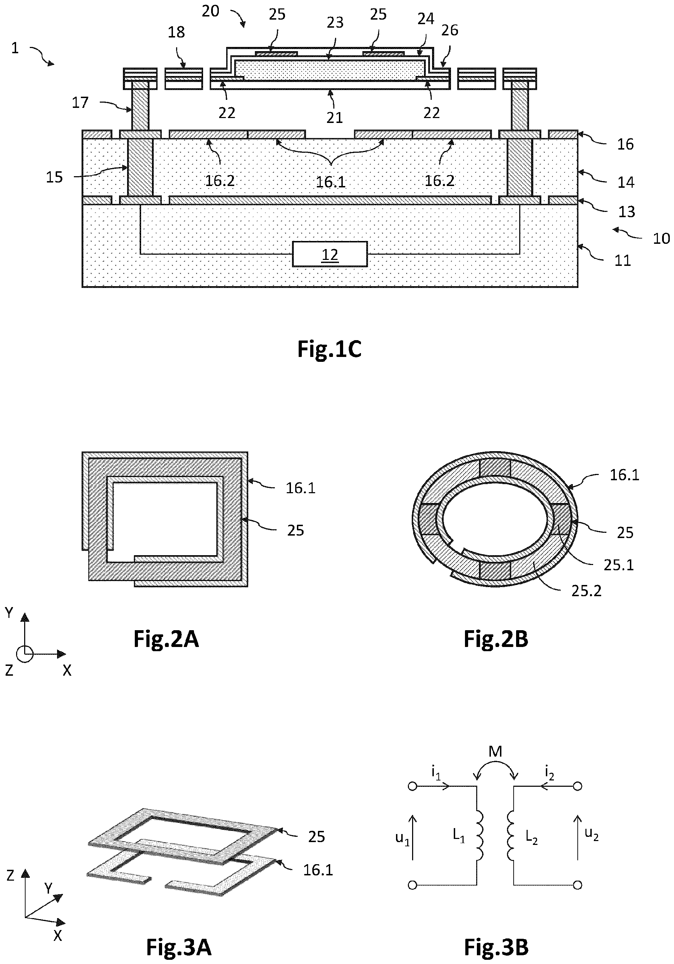

Les figures 1A à 1C sont des vues schématiques et partielles d'un détecteur thermique 1 à antenne selon un mode de réalisation, en perspective (fig.1A), en perspective et en éclaté (fig.1B) et en coupe transversale (fig.1C). La fig.1C est une vue selon une ligne de coupe permettant de mettre en évidence différents éléments du détecteur thermique 1.

On définit ici et pour la suite de la description un repère direct tridimensionnel XYZ, où le plan XY est sensiblement parallèle au plan du substrat de lecture 10, l'axe Z étant orienté suivant une direction sensiblement orthogonale au plan du substrat de lecture 10 en direction de la membrane suspendue 20. Les termes « inférieur » et « supérieur » s'entendent comme étant relatifs à un positionnement croissant lorsqu'on s'éloigne du substrat de lecture 10 suivant la direction +Z.

Le détecteur thermique 1 est ici adapté à détecter un rayonnement térahertz dont la longueur d'onde est comprise entre 0.1mm et 1mm environ. Il peut appartenir à une matrice de détecteurs thermiques identiques agencés mutuellement suivant un pas de l'ordre par exemple de $50\mu m$. Est représenté ici uniquement l'un des pixels de détection de la matrice de détecteurs thermiques. D'une manière générale, les détecteurs thermiques (pixels de détection) sont agencés périodiquement avec un pas $p_x$, $p_y$ suivant deux axes orthogonaux (ici les axes X et Y) dans le plan principal XY. Dans cet exemple, le pas est identique suivant les deux axes X et Y, et est ici égal à $50\mu m$.

Le détecteur thermique 1 comporte un substrat 10 avantageusement fonctionnalisé, dit substrat de lecture, réalisé dans cet exemple à base de silicium, comportant un circuit de lecture 12 permettant la commande et la lecture des détecteurs thermiques. Le circuit de lecture 12 se présente ici sous la forme d'un circuit intégré CMOS situé dans un substrat support. Il comporte des portions de lignes conductrices, par exemple métalliques, séparées les unes des autres par un matériau diélectrique, par exemple un matériau minéral à base de silicium tel qu'un oxyde de silicium $SiO_x$, un nitrure de silicium $SiN_x$, ou leurs alliages. Il peut également comporter des éléments électroniques actifs (non représentés), par exemple des diodes, transistors, ou des éléments électroniques passifs, par exemple des condensateurs, résistances..., connectés par des interconnexions électriques au détecteur thermique 1 d'une part, et à un plot de connexion (non représenté) d'autre part, ce dernier étant destiné à connecter le détecteur thermique 1 à un dispositif électronique externe.

Le détecteur thermique 1 comporte un réflecteur 13, réalisé en au moins un matériau réfléchissant vis-à-vis du rayonnement térahertz à détecter. Il repose ici sur la face supérieure du substrat de lecture 10, mais peut être espacé de celle-ci d'une distance non nulle. En variante, il peut être formé d'une portion de la ligne conductrice du dernier niveau d'interconnexion électrique du circuit intégré CMOS, et donc être situé dans le substrat de lecture 10.

Le substrat de lecture 10 et le réflecteur 13 sont ici recouverts par une couche diélectrique 14 réalisée en un matériau électriquement isolant, comme un oxyde de silicium. Cette couche diélectrique 14 est facultative, mais permet d'adapter la hauteur d'une cavité quart d'onde formée entre le réflecteur 13 et l'antenne de collection 16. Son épaisseur est ici sensiblement égale à $\grave{A}/4n$ où À est une longueur d'onde de référence du rayonnement térahertz à détecter et où n est l'indice de réfraction de la couche diélectrique 14.

Le détecteur thermique 1 comporte des piliers de connexion 15, réalisés en un matériau électriquement conducteur, qui traversent la couche diélectrique 14 et assurent la connexion électrique entre des piliers d'ancrage 17 et le circuit de lecture 12.

Le détecteur thermique 1 comporte une antenne de collection 16 adaptée à collecter le rayonnement térahertz à détecter. Elle est située à distance de la membrane suspendue 20 et est couplée à la charge résistive 25 par couplage inductif. Dans cet exemple, l'antenne de détection repose sur le substrat de lecture 10, ici sur la couche diélectrique 14, mais d'autres configurations sont possibles comme décrit plus loin. Elle est espacée du réflecteur 13 d'une distance permettant d'optimiser son absorption du rayonnement térahertz à détecter. L'antenne de détection est réalisée en un matériau métallique de faible résistivité électrique afin de limiter les pertes par effet Joule, et présente de préférence une résistance de couche inférieure ou égale à 1 $\Omega$/carré et une épaisseur comprise par exemple entre 200 et 400nm. Elle peut être réalisée en aluminium, en cuivre et en leurs alliages, entre autres.

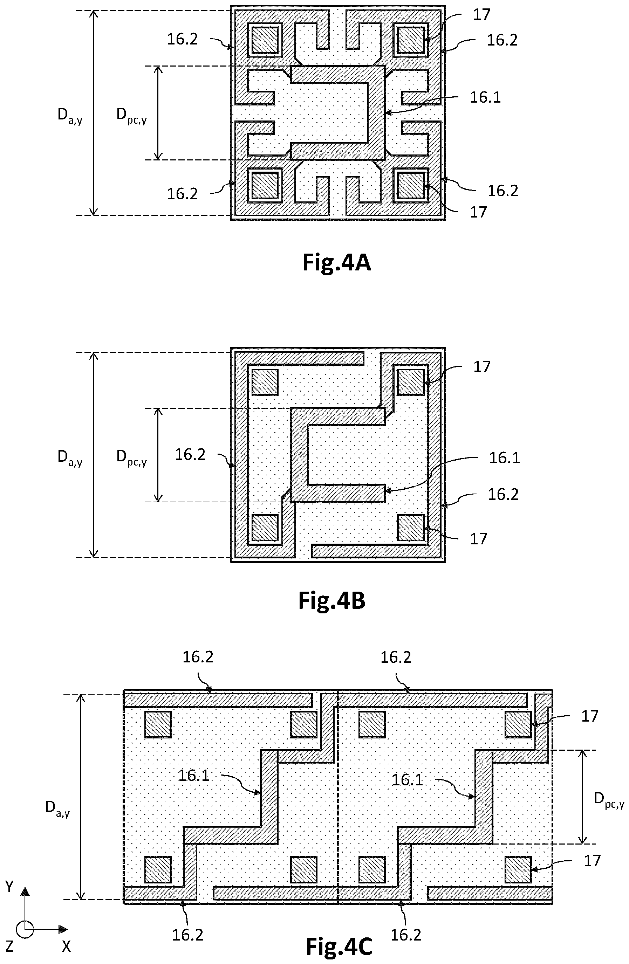

Comme le montre les figures 4A à 4C, l'antenne de collection 16 présente des dimensions externes maximales $D_{a,x}$, $D_{a,y}$ suivant deux axes orthogonaux (ici les axes X et Y) dans le plan principal XY (seule la dimension $D_{a,y}$ est représentée). Comme indiqué précédemment, une dimension externe maximale de l'antenne de collection 16 est une distance maximale suivant un axe dans le plan principal entre deux bordures externes de l'antenne de collection opposées l'une à l'autre et les plus éloignées l'une de l'autre, et associée à un même détecteur thermique (et donc située dans un même pixel de détection). Chacune de ces dimensions $D_{a,x}$, $D_{a,y}$ est de préférence supérieure ou égale à 90%, voire à 95%, du pas $p_x$, $p_y$ correspondant de la matrice de détecteurs thermiques.

De plus, chacune des dimensions externes maximales $D_{a,x}$, $D_{a,y}$ de l'antenne de collection 16 étant inférieure ou égale à $\lambda_c/8$, où $\lambda_c$ est la longueur d'onde principale du rayonnement électromagnétique à détecter, lequel présente une gamme spectrale prédéfinie (ici allant de 0.1mm à 1mm dans le cas du térahertz). La longueur d'onde principale $\lambda_c$ peut ainsi être égale à 545μm (550GHz). On se distingue ainsi des exemples de l'art antérieur où l'antenne de collection présente habituellement une dimension maximale de l'ordre de la longueur d'onde principale $\lambda_c$, soit ici une dimension de l'ordre de 500μm).

A titre d'exemple, pour une longueur d'onde principale $\lambda_c$ de 545μm, et un pas $p_x$, $p_y$ de 50μm, l'antenne de collection 16 peut présenter des dimensions externes maximales de l'ordre de $\lambda_c/11$, par exemple égales à $48 \times 48$μm², ce qui représente 96% du pas du réseau.

L'antenne de collection 16 est formée d'une piste centrale 16.1 dite de couplage, adaptée à assurer le couplage inductif avec la charge résistive 25, et une partie latérale 16.2 dite de collection adaptée à absorber une partie importante du rayonnement térahertz incident. La piste de couplage 16.1 et la partie latérale de collection 16.2 sont réalisées d'un seul tenant (i.e. de manière continue, sans discontinuité de matière entre elles), et ici en un même matériau métallique de faible résistivité électrique.

La piste de couplage 16.1 est située à la perpendiculaire de la piste de la charge résistive 25 et s'étend longitudinalement dans le plan XY en forme de boucle continue ouverte (anneau ouvert). Elle présente donc une forme, dans le plan XY, qui est corrélée à celle de la charge résistive 25, de sorte que la circulation des charges électriques dans la piste de couplage 16.1 et celle dans la piste de la charge résistive 25 soient sensiblement parallèles entre elles, améliorant ainsi le coefficient de couplage entre les deux pistes 16.1, 25. La piste de couplage 16.1 et la piste de la charge résistive 25 peuvent présenter une forme, dans le plan XY, circulaire, ovale ou polygonale (ici rectangulaire).

La piste de couplage 16.1 est donc une bande, c'est-à-dire une couche mince dont la longueur est supérieure à sa largeur, qui est continue dans la mesure où elle n'est pas formée de sections distinctes avec une discontinuité de matière entre ces sections. La piste de couplage 16.1 s'étend en forme, dans le plan XY, de boucle ouverte, dans le sens où elle n'est pas fermée sur elle-même : les charges électriques peuvent y circuler en faisant des allers-retours entre ses deux extrémités opposées (courant électrique alternatif).

Elle s'étend sur toute sa longueur à la perpendiculaire de la charge résistive 25. Sa largeur peut être supérieure, sensiblement égale, ou inférieure à celle de la piste de la charge résistive 25. Par ailleurs, elle présente une longueur, dans une zone centrale située à la perpendiculaire de la membrane suspendue 20, qui est au moins égale à 50% mais évidemment inférieure à 100% de la longueur de la piste de la charge résistive 25 (puisque la piste de couplage 16.1 est en forme de boucle ouverte).

Comme le montre également les figures 4A à 4C, la piste de couplage 16.1 présente des dimensions externes maximales $D_{pc,x}$, $D_{pc,y}$ suivant les deux axes orthogonaux X et Y (seule la dimension $D_{pc,y}$ est représentée). Comme indiqué précédemment, une dimension externe maximale de la piste de couplage 16.1 est une distance maximale suivant un axe dans le plan principal entre deux bordures externes de la piste de couplage opposées l'une à l'autre et les plus éloignées l'une de l'autre. Chacune des dimensions externes maximales $D_{pc,x}$, $D_{pc,y}$ de la piste de couplage 16.1 est supérieure ou égale à 35% de la dimension externe maximale $D_{a,x}$, $D_{a,y}$ correspondante de l'antenne de collection 16, et de préférence inférieure ou égale à 75%.

Ainsi, les inventeurs ont constaté que la piste de couplage 16.1 participe efficacement, avec les parties latérales 16.2, à la collection du rayonnement électromagnétique à détecter. La piste de couplage 16.1 présente ainsi deux fonctions, à savoir une fonction de couplage inductif avec la charge résistive 25, et une fonction de collection du rayonnement. De plus, l'antenne de collection présentant des dimensions maximales réduites vis-à-vis de la longueur d'onde principale $\lambda_c$ (au plus égales à $\lambda_c/8$), on évite que la piste de couplage 16.1 présente des dimensions importantes, ce qui pourrait générer des résonances parasites dans le courant électrique alternatif, et donc dégrader la qualité du couplage inductif avec la charge résistive.

Par ailleurs, la largeur de la piste de couplage 16.1 (i.e. sa dimension transversale dans le plan principal) est de préférence supérieure ou égale à 5% de la dimension externe maximale $D_{a,x}$, $D_{a,y}$ correspondante de l'antenne de collection. Elle peut être inférieure ou égale à 80%, à 50%, voire à 20% des dimensions externes maximales $D_{pc,x}$, $D_{pc,y}$.

A titre d'exemple, pour une longueur d'onde principale $\lambda_c$ de 545μm, un pas $p_x$, $p_y$ de 50μm, des dimensions externes maximales $D_{a,x}$, $D_{a,y}$ de $48 \times 48$μm² de l'antenne de collection 16, la piste de couplage peut présenter des dimensions externes maximales de $30 \times 22$μm² (soit 62% et 46% environ des dimensions maximales de l'antenne 16), et une largeur de 4μm (soit 8% environ des dimensions maximales de l'antenne 16, et de l'ordre de 15% des dimensions maximales de la piste de couplage 16.1).

La partie latérale de collection 16.2 est adaptée à optimiser la collection du rayonnement térahertz à détecter. De plus, elle est raccordée continûment à la piste de couplage 16.1. Ainsi, pour maximiser la collection du rayonnement incident, elle s'étend dans le plan XY à partir de la piste de couplage 16.1 sur une surface du pixel de détection qui n'est pas surplombée par la membrane suspendue 20. Elle comporte au moins deux motifs similaires ou identiques adaptés à optimiser la collection du rayonnement incident à détecter, par exemple selon les différentes composantes de sa polarisation. Ces motifs sont avantageusement raccordés l'un au niveau d'une extrémité longitudinale de la piste de couplage, et l'autre au niveau de l'extrémité longitudinale opposée. Comme l'illustre en détail la fig.1B, la partie latérale de collection 16.2 est formée de quatre motifs de type papillon disposés deux à deux de manière symétrique de part et d'autre de la piste de couplage 16.1. Les motifs sont distincts entre eux de manière à ne pas court-circuiter le courant électrique circulant dans la piste de couplage 16.1. Dans cet exemple, les motifs papillons présentent une forme globale triangulaire dans le plan XY, dont la largeur augmente à mesure que l'on s'éloigne de la piste de couplage 16.1. Ainsi, une large surface des motifs papillons est située dans une zone non surplombée par la membrane suspendue 20, améliorant ainsi la collection du rayonnement incident à détecter. D'autres formes globales sont possibles dont certaines sont détaillées par la suite.

Le détecteur thermique 1 comporte une membrane thermométrique 20, suspendue au-dessus du substrat de lecture 10 et ici de la couche diélectrique 14 par des piliers d'ancrage 17, et isolée de celui-ci par des bras d'isolation thermique 18. Les piliers d'ancrage 17 et les bras d'isolation thermique 18 assurent également la connexion électrique de la portion thermistance 23 au circuit de lecture 12 (ici via les piliers de connexion 15). Les piliers d'ancrage 17 sont réalisés en au moins un matériau électriquement conducteur, et sont connectés électriquement aux piliers de connexion 15 sous-jacents (et s'étendent ici à la verticale de ces derniers). Les bras d'isolation thermique 18 comportent une couche réalisée en au moins un matériau électriquement conducteur, qui s'étend des piliers d'ancrage 17 jusqu'à la membrane suspendue 20, et forme une électrode de polarisation de la portion thermistance 23.

La membrane suspendue 20 comporte un transducteur thermométrique, ici une portion thermistance 23, connecté électriquement au circuit de lecture 12 par les électrodes de polarisation 22. Il repose sur une couche inférieure diélectrique 21 et est au contact des électrodes de polarisation 22. Il est recouvert par une couche intermédiaire diélectrique 24. La charge résistive 25 repose ici sur la couche intermédiaire diélectrique 24, et est revêtue par une couche supérieure de protection 26. D'autres agencements de ces éléments sont bien entendu possibles.

La charge résistive 25 est adaptée à dissiper de la chaleur par effet Joule lorsqu'elle est parcourue par un courant électrique. Elle est agencée dans la membrane suspendue 20 de manière à être en contact thermique avec la portion thermistance 23 (couplage thermique), de sorte que la chaleur dissipée par effet Joule conduise à une augmentation de la température de la portion thermistance 23. Elle est ici espacée et électriquement isolée de la portion thermistance 23 par la couche intermédiaire diélectrique 24, qui peut être réalisée par exemple en un oxyde ou nitrure de silicium et peut présenter une épaisseur par exemple de l'ordre de 10nm environ. Cependant, d'autres agencements de la charge résistive 25 vis-à-vis de la portion thermistance 23 sont possibles. Elle peut ainsi être située sous la portion thermistance 23.

La charge résistive 25 est une piste qui s'étend dans le plan XY en forme de boucle continue fermée. Elle s'étend donc longitudinalement en étant refermée sur elle-même. Elle est située à la verticale de la piste de couplage 16.1 de l'antenne de collection 16 de manière à optimiser le coefficient de couplage entre les deux pistes 16.1, 25.

La charge résistive 25 comporte au moins une portion résistive présentant une résistance de couche supérieure ou égale à 1 Ω/carré, et de préférence comprise entre 1 Ω/carré et 10 Ω/carré de manière à optimiser le couplage inductif et donc la dissipation par effet Joule. Dans une configuration dite continue (fig.2A), la charge résistive 25 est une piste continûment résistive formée par la portion résistive seule. La charge résistive 25 présente alors, sur toute sa longueur, la résistance de couche avantageusement comprise entre 1 Ω/carré et 10 Ω/carré. Dans une configuration dite localisée (fig.2B), la charge résistive 25 comporte au moins la portion résistive 25.1 dont la résistance de couche est avantageusement comprise entre 1 Ω/carré et 10 Ω/carré et au moins une portion conductrice 25.2 dont la résistance de couche est inférieure à 1 Ω/carré.

La portion résistive de la charge résistive 25 peut être réalisée par exemple en niobium, voire en titane, en nitrure de titane, voire en leurs alliages. Elle présente une épaisseur par exemple comprise entre 20nm et 200nm environ, voire moins en fonction du matériau. Par ailleurs, la charge résistive 25 est espacée de la piste de couplage 16.1 suivant l'axe Z d'une distance d'au plus 5μm. Notons que la charge résistive 25 présente une résistance de couche bien inférieure à celle des électrodes 22. Ainsi, la résistance de couche de la charge résistive 25 est de préférence de l'ordre de 1 à 10 Ω/carré pour optimiser le couplage inductif, alors que celle des électrodes 22 peut être de l'ordre de 200 Ω/carré de manière à limiter la conduction thermique.

Les figures 2A et 2B sont des vues de dessus, schématiques et partielles, de la charge résistive 25 et de la piste de couplage 16.1 de l'antenne de collection 16, selon deux variantes de réalisation.

Dans l'exemple de la fig.2A, la charge résistive 25 présente une configuration dite continue (piste continûment résistive), dans la mesure où la piste est réalisée, sur toute sa longueur, en au moins un métal de haute résistivité électrique (résistance de couche supérieure ou égale à 1 $\Omega$/carré). Par ailleurs, dans cet exemple, elle s'étend dans le plan XY en boucle continue fermée qui présente une forme rectangulaire. La piste de couplage 16.1 présente ici une largeur supérieure à celle de la charge résistive 25 et s'étend sur toute sa longueur à la perpendiculaire de la piste de la charge résistive 25.

Dans l'exemple de la fig.2B, la charge résistive 25 présente une configuration dite localisée (piste localement résistive), dans la mesure où elle comporte au moins une portion résistive, ici quatre portions résistives 25.1, réalisée en au moins un métal de haute résistivité électrique (résistance de couche supérieure ou égale à 1 $\Omega$/carré et de préférence comprise entre 1 et 10 $\Omega$/carré), par exemple du TiN d'une épaisseur de 7 à 20nm, et des portions conductrices 25.2 réalisées en au moins un métal de faible résistivité électrique (résistance de couche inférieure à 1 $\Omega$/carré), par exemple de l'aluminium, qui relient entre elles les portions résistives 25.1. Ainsi, la piste de la charge résistive 25 présente effectivement une forme de boucle continue fermée. Par ailleurs, dans cet exemple, les pistes 16.1, 25 s'étendent dans le plan XY en forme d'ovale.

Ainsi, en fonctionnement, le rayonnement électromagnétique à détecter est collecté par l'antenne de collection 16 et en particulier par la partie latérale de collection 16.2 raccordée à la piste de couplage 16.1. Le courant électrique alternatif induit dans la piste de couplage 16.1 génère un champ magnétique orienté de manière orthogonale au plan XY. Par couplage inductif, ce champ magnétique génère un courant électrique dans la piste en forme de boucle fermée de la charge résistive 25. Cette puissance électromagnétique reçue par la charge résistive 25 est alors convertie en puissance calorifique qui est transmise par dissipation par effet Joule à la portion thermistance 23 et provoque ainsi son échauffement. Notons que le couplage entre la piste de couplage 16.1 et la charge résistive 25 est ici de type inductif du fait de l'agencement relatif et de la forme de ces dernières, mais cela n'exclut pas qu'il puisse également comporter une contribution capacitive.

Un tel détecteur thermique 1 présente alors des performances améliorées par rapport à celles d'un détecteur thermique 1 à antenne et couplage capacitif. En effet, la membrane suspendue 20 ne comporte pas de parties métalliques de grande surface (ailettes de couplage capacitif, antenne d'absorption... comme décrit dans le document de l'art antérieur mentionné précédemment), ce qui réduit sa capacité thermique, et donc améliore la constante de temps thermique du détecteur thermique 1 selon l'invention. De plus, dans la mesure où il n'est pas nécessaire de réaliser des parties métalliques de grande surface dans la membrane suspendue 20, le procédé de fabrication est simplifié. Enfin, la membrane suspendue 20 présente une meilleure tenue mécanique puisque sa masse est réduite et qu'il n'y a pas de parties en saillie dans le plan XY. Par ailleurs, le détecteur thermique 1 présente une sensibilité améliorée à taille de pixel identique, dans la mesure où l'antenne de collection 16 peut résonner à une plus grande longueur d'onde que dans les détecteurs thermiques à antenne de l'art antérieur (notamment EP2246677A1 et US6329655B1). Ceci est en effet obtenu par la piste de couplage 16.1 en forme de boucle ouverte qui assure le raccord entre les motifs de la partie latérale de couplage 16.2, ces motifs étant avantageusement raccordés à la piste 16.1 au niveau de ses extrémités longitudinales opposées. La distance maximale de parcours des charges électriques entre les deux extrémités les plus éloignées de l'antenne de collection 16 est augmentée. Le détecteur thermique peut alors ici détecter des rayonnements sub-térahertz, par exemple à 750GHz ou à 500GHz.

A titre d'exemple, le détecteur thermique 1 illustré sur la fig.1A appartient à un pixel d'une matrice de détection, qui présente une dimension latérale de 50$\mu$m environ. La couche diélectrique 14 peut être un oxyde de silicium d'une épaisseur de 11$\mu$m environ. La membrane suspendue 20 peut être espacée de l'antenne de collection 16 d'une distance de 1 à 3$\mu$m environ, typiquement de l'ordre du dixième de la plus grande dimension de la piste de la charge résistive 25. Dans cet exemple, cette dernière présente une forme rectangulaire de côté 28$\times$20$\mu$m. La simulation de ce détecteur thermique 1 par un logiciel de simulation tel que Ansys HFSS montre que le taux d'absorption est de l'ordre de 26% pour un rayonnement électromagnétique incident à 540GHz en polarisation linéaire orientée suivant une diagonale du pixel de détection.

De plus, un tel détecteur thermique 1 à antenne selon l'invention peut présenter des performances telles qu'une importante proportion de la puissance électromagnétique collectée par l'antenne de collection 16 est convertie en puissance calorifique par la charge résistive 25 et dissipée dans le transducteur thermométrique 23.

A ce titre, la figure 3A est une vue en perspective, schématique et partielle, d'une piste de la charge résistive 25 en configuration continue (piste continûment résistive) située à la verticale d'une piste de couplage 16.1 de l'antenne de collection 16. La figure 3B illustre un schéma électrique équivalent à ces deux pistes 16.1, 25 couplées de manière inductive.

Dans cet exemple, les deux pistes 16.1, 25 forment des boucles continues carrées dans le plan XY, de dimensions externes 20$\times$20$\mu$m, d'une largeur de 2$\mu$m et d'une épaisseur de 350nm, espacées l'une de l'autre suivant l'axe Z de 2$\mu$m. La piste de couplage 16.1 est ouverte et est connectée à un générateur d'un courant électrique alternatif équivalent à la collection d'un rayonnement électromagnétique à 750GHz, et la piste de la charge résistive 25 présente une résistance de couche de 5 $\Omega$/carré.

Le schéma électrique équivalent comporte deux circuits électriques comportant des bobines d'inductances propres $L_1$, $L_2$. Le circuit 1 correspond à la piste de couplage 16.1 et est connecté à un générateur électrique, et le circuit 2 est connectée à une charge résistive. Ce schéma électrique est simplifié et chaque circuit électrique peut être notamment complété par une résistance en série avec l'inductance et caractérisant sa résistance interne, et par une capacité connectée en parallèle avec la résistance et l'inductance. Les deux bobines sont couplées l'une à l'autre de manière inductive, ce couplage étant caractérisé par l'inductance mutuelle M et par un coefficient de couplage k tel que $k = M/\sqrt{L_1 L_2}$. Le modèle électrique équivalent s'écrit ici :

$$u_1 = L_1 \frac{di_1}{dt} + M \frac{di_2}{dt}$$

$$u_2 = L_2 \frac{di_2}{dt} + M \frac{di_1}{dt}$$

On simule le comportement de ces deux pistes couplées l'une à l'autre de manière inductive au moyen d'un logiciel de simulation de champ électromagnétique, tel que le logiciel Ansys HFSS. Dans le cas de l'injection d'un courant électrique alternatif au port 1 correspondant à une fréquence de 750GHz, le bilan de puissance indique que pour 100% de puissance délivrée au port 1, 58% de la puissance délivrée est réfléchie et 42% de la puissance délivrée est effectivement collectée. La puissance réfléchie provient d'un défaut de l'adaptation d'impédance du port 1 et pourra être réduite en optimisant l'impédance du port 1. Ensuite, 9% de la puissance délivrée est dissipée par effet Joule dans la piste de couplage 16.1 et 9% est également dissipée dans la piste résistive, et 24% est transmise au port 2 par couplage inductif et pourra être dissipée. Aussi, la puissance totale dissipée par effet Joule par la piste résistive est de 33% de la puissance initiale délivrée (9% + 24%).

Il apparaît donc que le couplage inductif entre les deux pistes 16.1, 25 du détecteur thermique 1 permet de transmettre et de convertir une part importante de la puissance électromagnétique collectée par l'antenne de collection 16 d'un tel détecteur thermique 1.

Des modes de réalisation particuliers viennent d'être décrits. Différentes variantes et modifications apparaîtront à l'homme du métier.

Les figures 4A à 4C sont des vues de dessus, schématiques et partielles, d'une antenne de collection 16 d'un détecteur thermique 1 selon différentes variantes de réalisation. D'autres formes sont bien entendu possibles.

Dans l'exemple de la fig.4A, l'antenne de collection 16 comporte une piste de couplage 16.1 en forme de U, et une partie latérale de collection 16.2 formée de quatre motifs identiques. Chaque motif s'étend à partir d'un coin ou d'une extrémité de la piste de couplage 16.1, et présente une forme sensiblement triangulaire. Ainsi, des pistes s'étendent autour des piliers d'ancrage 17 et le long de la bordure du pixel de détection.

Dans l'exemple de la fig.4B, l'antenne de collection 16 comporte également une piste de couplage 16.1 en forme de U, et une partie latérale de collection formée de deux motifs identiques. Chaque motif s'étend à partir d'un coin ou d'une extrémité de la piste de couplage 16.1, et est formé d'une piste qui contourne un pilier d'ancrage et s'étend le long de plusieurs côtés du pixel de détection.

Dans l'exemple de la fig.4C, l'antenne de collection 16 comporte également une piste de couplage 16.1 présentant deux bandes orthogonales l'une à l'autre, et une partie latérale de collection 16.2 formée de deux pistes qui s'étendent chacune le long d'un côté du pixel de détection considéré, et le long de côté de pixels de détection adjacents.

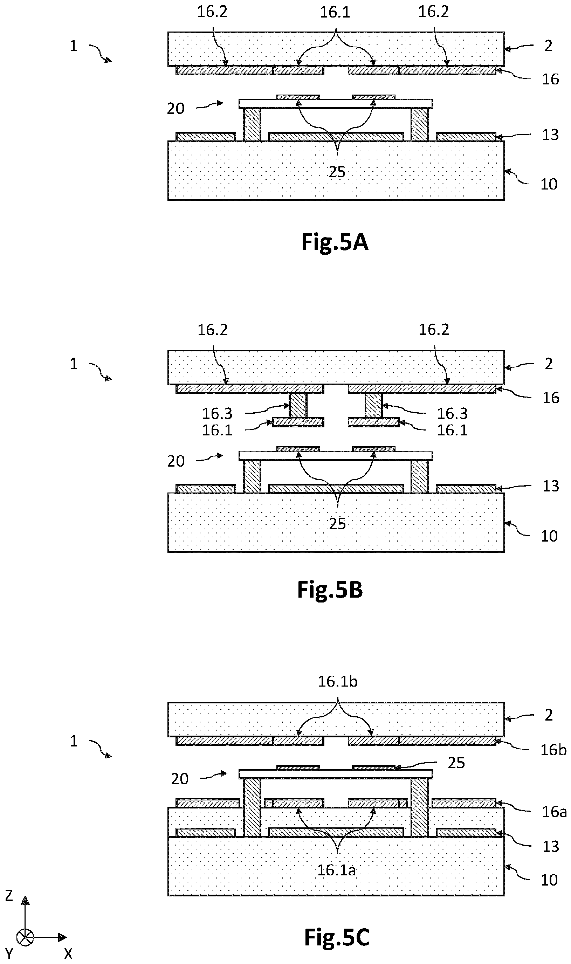

Les figures 5A à 5C sont des vues schématiques et partielles, en coupe transversale, d'un détecteur thermique 1 selon différentes variantes de réalisation, qui diffèrent entre elles par l'agencement de l'antenne de collection vis-à-vis du substrat de lecture 10. D'autres formes sont bien entendu possibles.

Dans l'exemple de la fig.5A, l'antenne de collection ne repose pas sur le substrat de lecture 10, mais est assemblée et maintenue au-dessus de la membrane suspendue 20 par un support 2 qui peut assurer également l'encapsulation du détecteur thermique 1 ou de la matrice de détecteurs thermiques dans une cavité sous vide ou à pression réduite. Dans cet exemple, l'antenne de collection 16 étant davantage éloignée du réflecteur 13 que dans le cas de la fig.1A, la couche diélectrique 14 peut être omise. Ici, la piste de couplage 16.1 et la partie latérale de collection 16.2 s'étendent de manière coplanaire sur le support 2.

Dans l'exemple de la fig.5B, l'antenne de collection 16 est également assemblée à un support 2 qui la maintient au-dessus de la membrane absorbante. Elle comporte une partie latérale de collection 16.2 qui s'étend sur le support 2, et une piste de couplage 16.1 espacée du support 2 en direction de la membrane 20 et connectée à la partie latérale de collection 16.2 par des piliers de maintien 16.3 réalisés en un matériau métallique.

Dans l'exemple de la fig.5C, le détecteur thermique 1 comporte deux antennes de collection 16a, 16b, une antenne inférieure 16a qui repose sur le substrat de lecture 10, sous la membrane suspendue 20, et une antenne supérieure 16b assemblée à un support 2 qui la maintient au-dessus de la membrane suspendue 20. Les deux antennes de collection 16a, 16b sont couplées de manière inductive à la charge résistive 25.

## Revendications

1. Détecteur thermique (1) d'un rayonnement électromagnétique à une longueur d'onde principale $\lambda_c$ comprise dans une gamme spectrale prédéfinie, comportant :

○ un substrat de lecture (10), comportant un circuit de lecture (12), et présentant un plan principal ;
○ une membrane suspendue (20) au-dessus et isolée thermiquement du substrat de lecture (10), comportant : un transducteur thermométrique (23), connecté électriquement au circuit de lecture (12) ; et une charge résistive (25), en contact thermique avec le transducteur thermométrique (23), adaptée à convertir en puissance calorifique de la puissance électromagnétique reçue d'une antenne de collection (16) ;
○ l'antenne de collection (16), adaptée à collecter le rayonnement électromagnétique à détecter, située à distance de la membrane suspendue (20), et couplée à la charge résistive (25) pour lui transmettre une puissance électromagnétique, l'antenne de collection comportant

- une piste dite de couplage (16.1), située à la perpendiculaire de la charge résistive (25)
- une partie latérale de collection (16.2), raccordée à la piste de couplage (16.1), et s'étendant à partir de celle-ci dans une zone non surplombée par la membrane suspendue (20) ;

○ **caractérisé en ce que** :

• la charge résistive (25) est formée d'une piste qui s'étend longitudinalement en forme de boucle continue fermée ;
• la piste dite de couplage (16.1) s'étend longitudinalement en forme de boucle continue ouverte, autorisant ainsi un couplage inductif entre la piste de couplage (16.1) et la charge résistive (25) ;
• l'antenne de collection (16) présente des dimensions externes maximales ($D_{a,x}$, $D_{a,y}$) suivant deux axes orthogonaux dans le plan principal, chacune des dimensions externes maximales ($D_{a,x}$, $D_{a,y}$) de l'antenne de collection (16) étant inférieure ou égale à $\lambda_c/8$ ;
• la piste de couplage (16.1) présente des dimensions externes maximales ($D_{pc,x}$, $D_{pc,y}$) suivant lesdits axes orthogonaux, chacune des dimensions externes maximales ($D_{pc,x}$, $D_{pc,y}$) de la piste de couplage (16.1) étant supérieure ou égale à 35% de la dimension externe maximale ($D_{a,x}$, $D_{a,y}$) correspondante de l'antenne de collection (16).

2. Détecteur thermique (1) selon la revendication 1, dans lequel la charge résistive (25) comporte au moins une portion résistive présentant une résistance de couche supérieure ou égale à 1 $\Omega$/carré.

3. Détecteur thermique (1) selon la revendication 2, dans lequel la portion résistive de la charge résistive (25) présente une résistance de couche comprise entre 1 $\Omega$/carré et 10 $\Omega$/carré.

4. Détecteur thermique (1) selon la revendication 2 ou 3, dans lequel la charge résistive (25) est une piste continûment résistive formée par la portion résistive seule, ou est une piste localement résistive formée d'au moins la portion résistive (25.1), et d'au moins une portion conductrice (25.2) présentant une résistance de couche inférieure à 1 $\Omega$/carré.

5. Détecteur thermique (1) selon l'une quelconque des revendications 1 à 4, dans lequel la charge résistive (25) et la piste de couplage (16.1) sont espacées l'une de l'autre suivant un axe orthogonal au substrat de lecture (10) d'au plus 5 $\mu$m.

6. Détecteur thermique (1) selon l'une quelconque des revendications 1 à 5, dans lequel la partie latérale de collection (16.2) comporte au moins deux motifs distincts, raccordés chacun à la piste de couplage, et adaptés à collecter le rayonnement électromagnétique à détecter selon des polarisations orthogonales entre elles.

7. Détecteur thermique (1) selon la revendication 6, dans lequel les deux motifs sont raccordés, l'un au niveau d'une extrémité longitudinale de la piste de couplage, et l'autre au niveau de l'extrémité longitudinale opposée.

8. Détecteur thermique (1) selon l'une quelconque des revendications 1 à 7, comportant une couche diélectrique (14) reposant sur le substrat de lecture (10), l'antenne de collection (16) reposant sur la couche diélectrique (14), la membrane suspendue (20) étant espacée de l'antenne de collection (16) par des piliers d'ancrage (17) réalisés en au moins un matériau électriquement conducteur.

9. Détecteur thermique (1) selon l'une quelconque des revendications 1 à 8, dans lequel l'antenne de collection (16) est assemblée à un support (2) s'étendant au-dessus et à distance de la membrane suspendue (20).

10. Détecteur thermique (1) selon la revendication 9, dans lequel la piste de couplage (16.1) et la partie latérale de collection (16.2) s'étendent sur le support (2) de manière coplanaire.

**11.** Détecteur thermique (1) selon la revendication 9, dans lequel la partie latérale de collection (16.2) s'étend sur le support (2), et la piste de couplage (16.1) est espacée du support (2) en direction de la membrane suspendue (20) et est raccordée à la partie latérale de collection par des piliers de maintien (16.3).

**12.** Détecteur thermique (1) selon l'une quelconque des revendications 1 à 11, comportant une première antenne de collection (16a) reposant sur une couche diélectrique (14) reposant sur le substrat de lecture (10), et une deuxième antenne de collection (16b) assemblée à un support (2) s'étendant au-dessus et à distance de la membrane suspendue (20), les deux antennes de collection (16a, 16b) étant couplées à la charge résistive (25) par couplage inductif.

**13.** Détecteur thermique (1) selon l'une quelconque des revendications 1 à 12, adapté à détecter un rayonnement électromagnétique térahertz dont la gamme spectrale est comprise entre 0.1 et 1mm, la longueur d'onde principale $\lambda_c$ étant une longueur d'onde centrale de ladite gamme spectrale.

**14.** Détecteur thermique (1) selon l'une quelconque des revendications 1 à 13, dans lequel le substrat de lecture (10) est réalisé à base de silicium.

**15.** Dispositif de détection comportant une matrice de détecteurs thermiques (1) selon l'une quelconque des revendications précédentes, dans lequel la matrice présente un agencement périodique des détecteurs thermiques avec un pas ($p_x$, $p_y$) suivant lesdits deux axes orthogonaux dans le plan principal, chacune des dimensions externes maximales ($D_{pc,x}$, $D_{pc,y}$) de l'antenne de couplage (16) étant supérieure ou égale à 90% du pas ($p_x$, $p_y$) correspondant de la matrice.

**Patentansprüche**

**1.** Thermischer Detektor (1) für eine elektromagnetische Strahlung mit einer Hauptwellenlänge $\lambda_c$, die in einem vorgegebenen Spektralbereich enthalten ist, umfassend:

   o ein Auslesesubstrat (10), das einen Auslesekreis (12) umfasst und eine Hauptebene aufweist;
   o eine Membran (20), die darüber aufgehängt ist und von dem Auslesesubstrat (10) thermisch isoliert ist, umfassend: einen thermometrischen Umsetzer (23), der elektrisch an den Auslesekreis (12) angeschlossen ist; und eine resistive Last (25), in thermischem Kontakt mit dem thermometrischen Umsetzer (23), die geeignet ist, elektromagnetische Leistung, die von einer Sammelantenne (16) empfangen wird, in Wärmeleistung umzuwandeln;
   o die Sammelantenne (16), die geeignet ist, die zu detektierende elektromagnetische Strahlung zu sammeln, im Abstand von der aufgehängten Membran (20) angeordnet ist und mit der resistiven Last (25) gekoppelt ist, um an sie eine elektromagnetische Strahlung zu übertragen, wobei die Sammelantenne umfasst

   - eine sogenannte Kopplungsbahn (16.1), die in der Senkrechten zur resistiven Last (25) angeordnet ist
   - einen seitlichen Sammelteil (16.2), der mit der Kopplungsbahn (16.1) verbunden ist und sich von dieser aus in einem Bereich erstreckt, der nicht von der aufgehängten Membran (20) überspannt wird;

   o **dadurch gekennzeichnet, dass**:

   • die resistive Last (25) aus einer Bahn gebildet wird, die sich längs in Form einer geschlossenen durchgehenden Schleife erstreckt;
   • die sogenannte Kopplungsbahn (16.1) sich längs in Form einer offenen durchgehenden Schleife erstreckt, so dass eine induktive Kopplung zwischen der Kopplungsbahn (16.1) und der resistiven Last (25) zugelassen wird;
   • die Sammelantenne (16) maximale Außenmaße ($D_{a,x}$, $D_{a,y}$) entlang von zwei orthogonalen Achsen in der Hauptebene aufweist, wobei jedes der maximalen Außenmaße ($D_{a,x}$, $D_{a,y}$) der Sammelantenne (16) kleiner als oder gleich $\lambda_c/8$ ist;
   • die Kopplungsbahn (16.1) maximale Außenmaße ($D_{pc,x}$, $D_{pc,y}$) entlang der orthogonalen Achsen aufweist, wobei jedes der maximalen Außenmaße ($D_{pc,x}$, $D_{pc,y}$) der Kopplungsbahn (16.1) größer als oder gleich 35 % des entsprechenden maximalen Außenmaßes ($D_{a,x}$, $D_{a,y}$) der Sammelantenne (16) ist.

**2.** Thermischer Detektor (1) nach Anspruch 1, bei dem die resistive Last (25) mindestens einen resistiven Abschnitt umfasst, der einen Schichtwiderstand größer als oder gleich 1 $\Omega$/Quadrat aufweist.

**3.** Thermischer Detektor (1) nach Anspruch 2, bei dem der resistive Abschnitt der resistiven Last (25) einen Schichtwiderstand zwischen 1 $\Omega$/Quadrat und 10 $\Omega$/Quadrat aufweist.

**4.** Thermischer Detektor (1) nach Anspruch 2 oder 3, bei dem die resistive Last (25) eine durchgängig resistive Bahn ist, die durch den resistiven Abschnitt allein gebildet wird, oder eine lokal resistive Bahn ist, die durch mindestens den resistiven Abschnitt (25.1) und mindestens einen leitenden Abschnitt (25.2), der einen Schichtwiderstand von weniger als 1 Ω/Quadrat aufweist, gebildet wird.

5. Thermischer Detektor (1) nach einem der Ansprüche 1 bis 4, bei dem die resistive Last (25) und die Kopplungsbahn (16.1) voneinander entlang einer zum Auslesesubstrat (10) orthogonalen Achse um höchstens 5 μm beabstandet sind.

6. Thermischer Detektor (1) nach einem der Ansprüche 1 bis 5, bei dem der seitliche Sammelteil (16.2) mindestens zwei verschiedene Muster umfasst, die jeweils mit der Kopplungsbahn verbunden sind und geeignet sind, die zu detektierende elektromagnetische Strahlung gemäß untereinander orthogonalen Polarisationen zu sammeln.

7. Thermischer Detektor (1) nach Anspruch 6, bei dem die beiden Muster verbunden sind, das eine an einem Längsende der Kopplungsbahn und das andere an dem entgegengesetzten Längsende.

8. Thermischer Detektor (1) nach einem der Ansprüche 1 bis 7, umfassend eine dielektrische Schicht (14), die auf dem Auslesesubstrat (10) aufliegt, wobei die Sammelantenne (16) auf der dielektrischen Schicht (14) aufliegt, wobei die aufgehängte Membran (20) von der Sammelantenne (16) durch Verankerungspfeiler (17) beabstandet ist, die aus mindestens einem elektrisch leitenden Material ausgeführt sind.

9. Thermischer Detektor (1) nach einem der Ansprüche 1 bis 8, bei dem die Sammelantenne (16) an einem Träger (2) montiert ist, der sich über und im Abstand von der aufgehängten Membran (20) erstreckt.

10. Thermischer Detektor (1) nach Anspruch 9, bei dem sich die Kopplungsbahn (16.1) und der seitliche Sammelteil (16.2) komplanar auf dem Träger (2) erstrecken.

11. Thermischer Detektor (1) nach Anspruch 9, bei dem sich der seitliche Sammelteil (16.2) auf dem Träger (2) erstreckt und die Kopplungsbahn (16.1) von dem Träger (2) in Richtung der aufgehängten Membran (20) beabstandet ist und mit dem seitlichen Sammelteil über Haltepfeiler (16.3) verbunden ist.

12. Thermischer Detektor (1) nach einem der Ansprüche 1 bis 11, umfassend eine erste Sammelantenne (16a), die auf einer dielektrischen Schicht (14) aufliegt, die auf dem Auslesesubstrat (10) aufliegt, und eine zweite Sammelantenne (16b), die an einem Träger (2) montiert ist, der sich über und im Abstand von der aufgehängten Membran (20) erstreckt, wobei die beiden Sammelantennen (16a, 16b) mit der resistiven Last (25) durch induktive Kopplung gekoppelt sind.

13. Thermischer Detektor (1) nach einem der Ansprüche 1 bis 12, der geeignet ist, eine elektromagnetische Tetrahertzstrahlung zu detektieren, deren Spektralbereich zwischen 0.1 und 1 mm liegt, wobei die Hauptwellenlänge $\lambda_c$ eine zentrale Wellenlänge des Spektralbereichs ist.

14. Thermischer Detektor (1) nach einem der Ansprüche 1 bis 13, bei dem das Auslesesubstrat (10) auf Siliziumbasis ausgeführt ist.

15. Detektionsvorrichtung, umfassend eine Matrix aus thermischen Detektoren (1) nach einem der vorhergehenden Ansprüche, bei der die Matrix eine periodische Anordnung der thermischen Detektoren mit einer Schrittweite ($p_x$, $p_y$) entlang der beiden orthogonalen Achsen in der Hauptebene aufweist, wobei jedes der maximalen Außenmaße ($D_{pc,x}$, $D_{pc,y}$) der Kopplungsantenne (16) größer als oder gleich 90 % der entsprechenden Schrittweite ($p_x$, $p_y$) der Matrix ist.

**Claims**

1. Thermal detector (1) for detecting electromagnetic radiation at a main wavelength $\lambda_c$ comprised in a predefined spectral range, comprising:

   ○ a readout substrate (10), comprising a readout circuit (12), and having a main plane;
   ○ a membrane (20) suspended above and thermally insulated from the readout substrate (10), comprising: a thermometric transducer (23) electrically connected to the readout circuit (12); and a resistive load (25) making thermal contact with the thermometric transducer (23) and suitable for converting into heat electromagnetic power received from a collecting antenna (16);
   ○ the collecting antenna (16), which is suitable for collecting the electromagnetic radiation to be detected, is located away from the suspended membrane (20) and is coupled to the resistive load (25) with a view to transmitting thereto an electromagnetic power, the collecting antenna comprising

   - a track, referred to as the coupling track (16.1), which is located plumb with the resistive load (25);
   - a collecting lateral portion (16.2), which is connected to the coupling track (16.1) and extends therefrom into a region not overhung by the suspended membrane (20);

○ **characterized in that**:

• the resistive load (25) is formed from a track that extends longitudinally to form a closed continuous loop;
• the track referred to as the coupling track (16.1) extends longitudinally to form an open continuous loop, thus permitting inductive coupling between the coupling track (16.1) and the resistive load (25);
• the collecting antenna (16) has maximum outside dimensions ($D_{a,x}$, $D_{a,y}$) along two orthogonal axes in the main plane, each of the maximum outside dimensions ($D_{a,x}$, $D_{a,y}$) of the collecting antenna (16) being smaller than or equal to $\lambda_c/8$;
• the coupling track (16.1) has maximum outside dimensions ($D_{pc,x}$, $D_{pc,y}$) along said orthogonal axes, each of the maximum outside dimensions ($D_{pc,x}$, $D_{pc,y}$) of the coupling track (16.1) being larger than or equal to 35% of the corresponding maximum outside dimension ($D_{a,x}$, $D_{a,y}$) of the collecting antenna (16).

2. Thermal detector (1) according to Claim 1, wherein the resistive load (25) comprises at least one resistive segment having a sheet resistance higher than or equal to 1 $\Omega$/square.

3. Thermal detector (1) according to Claim 2, wherein the resistive segment of the resistive load (25) has a sheet resistance comprised between 1 $\Omega$/square and 10 $\Omega$/square.

4. Thermal detector (1) according to Claim 2 or 3, wherein the resistive load (25) is a continuously resistive track formed by the resistive segment alone, or is a locally resistive track formed from at least the resistive segment (25.1) and from at least one conductive segment (25.2) having a sheet resistance lower than 1 $\Omega$/square.

5. Thermal detector (1) according to any one of Claims 1 to 4, wherein the resistive load (25) and the coupling track (16.1) are spaced apart from each other along an axis orthogonal to the readout substrate (10) by more than 5 $\mu$m.

6. Thermal detector (1) according to any one of Claims 1 to 5, wherein the collecting lateral portion (16.2) comprises at least two distinct patterns, each connected to the coupling track, and suitable for collecting mutually orthogonal polarizations of the electromagnetic radiation to be detected.

7. Thermal detector (1) according to Claim 6, wherein the two patterns are connected, one to one longitudinal end of the coupling track, and the other to the opposite longitudinal end.

8. Thermal detector (1) according to any one of Claims 1 to 7, comprising a dielectric layer (14) resting on the readout substrate (10), the collecting antenna (16) resting on the dielectric layer (14), the suspended membrane (20) being spaced apart from the collecting antenna (16) by anchoring pillars (17) made of at least one electrically conductive material.

9. Thermal detector (1) according to any one of Claims 1 to 8, wherein the collecting antenna (16) is joined to a carrier (2) lying above and away from the suspended membrane (20).

10. Thermal detector (1) according to Claim 9, wherein the coupling track (16.1) and the collecting lateral portion (16.2) extend over the carrier (2) in a co-planar manner.

11. Thermal detector (1) according to Claim 9, wherein the collecting lateral portion (16.2) extends over the carrier (2), and the coupling track (16.1) is spaced apart from the carrier (2) in the direction of the suspended membrane (20) and is connected to the collecting lateral portion by holding pillars (16.3).

12. Thermal detector (1) according to any one of Claims 1 to 11, comprising a first collecting antenna (16a) resting on a dielectric layer (14) resting on the readout substrate (10), and a second collecting antenna (16b) joined to a carrier (2) lying above and away from the suspended membrane (20), the two collecting antennas (16a, 16b) being coupled to the resistive load (25) by inductive coupling.

13. Thermal detector (1) according to any one of Claims 1 to 12, suitable for detecting terahertz electromagnetic radiation, the spectral range of which is comprised between 0.1 and 1 mm, the main wavelength $\lambda_c$ being a central wavelength of said spectral range.

14. Thermal detector (1) according to any one of Claims 1 to 13, wherein the readout substrate (10) is made based on silicon.

15. Detecting device comprising a matrix array of thermal detectors (1) according to any one of the preceding claims, wherein the thermal detectors of the matrix array have a periodic arrangement with a pitch ($p_x$, $p_y$) along said two orthogonal axes in the main plane, each of the maximum outside dimensions ($D_{pc,x}$, $D_{pc,y}$) of the coupling antenna (16) being larger than or equal to 90% of the corresponding pitch ($p_x$, $p_y$) of the matrix array.

**Fig.1A**

**Fig.1B**

**Fig.1C**

**Fig.2A**

**Fig.2B**

**Fig.3A**

**Fig.3B**

**Fig.4A**

**Fig.4B**

**Fig.4C**

**Fig.5A**

**Fig.5B**

**Fig.5C**

## RÉFÉRENCES CITÉES DANS LA DESCRIPTION

*Cette liste de références citées par le demandeur vise uniquement à aider le lecteur et ne fait pas partie du document de brevet européen. Même si le plus grand soin a été accordé à sa conception, des erreurs ou des omissions ne peuvent être exclues et l'OEB décline toute responsabilité à cet égard.*

**Documents brevets cités dans la description**

- EP 2246677 A1
- US 6329649 B1
- US 6329655 B1